# EUROPEAN PATENT APPLICATION

(11) **EP 2 722 547 A1**
(43) Date of publication of application: **23.04.2014**
(21) Application number: 13189478.4
(22) Date of filing: 21.10.2013
(51) Int. Cl.: F16C 35/077, H02K 5/173

(54) **Insulated bearing ring**

(30) Priority: 22.10.2012 US 201213656989
(71) Applicant: General Electric Company, Schenectady, New York 12345 (US)
(72) Inventor: Murikipudi, Harikiran, 500090 Andhra Pradesh (IN); Tumma, Vijayakumar, 500090 Andhra Pradesh (IN)
(74) Representative: Illingworth-Law, William Illingworth

(57) **Abstract**

An insulated bearing, a dynamoelectric machine including the insulated bearing, and a method of forming the insulated bearing are disclosed. In an embodiment, the bearing includes an outer ring 110, an inner ring 120 disposed within the outer ring 110 and concentric therewith. An insulating ring 130 is disposed between the inner ring 120 and the outer ring 110, and includes an outer circumferential serration 140 extending radially outward from an outer surface of the insulating ring 130, and an inner circumferential serration 150 extending radially inward from an inner surface of the insulating ring 130. These serrations mate with features of respective surfaces of the outer and inner rings.

## Description

### BACKGROUND OF THE INVENTION

The invention relates generally to bearings used in dynamoelectric machines, and more particularly, to electrically insulated bearings for use in such machines.

Conventional large, high speed dynamoelectric machines typically include a stator and a rotor that rotates about a longitudinal axis within the stator to convert mechanical energy into electrical energy. The rotor may include a shaft and a rotor body which may include coils carry current. Bearings are typically used to secure the shaft, with a bearing at each end of the shaft, and allow it to rotate freely. Depending on the type of dynamoelectric machine, electric currents can be established intentionally or produced by, e.g., magnetic imbalances, static storage, direct application of external power to the rotor shaft, and induced electricity generated in the rotor with the use of a rectified power source. Regardless of how produced, it is desirable to insulate shaft currents from the bearings.

In the absence of insulation, the shaft currents flow from the shaft through the bearing to the end shield or to a frame through a bearing on the other end of the shaft. Such current flow through the bearings may result in wear and degradation of the bearings, damage to the shaft, blackening of lubricating oil, damage or scorching of the bearing, and other undesirable consequences.

Insulated bearing rings, such as those coated with ceramic or insulating material have been used to safeguard the bearings from such degradation and damage, but existing insulated bearing rings have a number of disadvantages including long lead times for manufacture, and lack of flexibility in size and dimensions. Another method of insulating bearings from the shaft includes providing a ceramic coating on the shaft. This method suffers from the drawback of chipped ceramic, and therefore diminshed insulating capacity and bearing fit, as a result of routine bearing replacement.

### BRIEF DESCRIPTION OF THE INVENTION

A first aspect of the disclosure provides a bearing ring having: an outer ring having an inner circumferential channel disposed on a radially inward surface thereof; an inner ring disposed within the outer ring and concentric therewith, the inner ring having an outer circumferential channel disposed on a radially outward surface thereof; and an insulating ring disposed between the inner ring and the outer ring. The insulating ring includes: an outer circumferential serration extending radially outward from an outer surface of the insulating ring, and an inner circumferential serration extending radially inward from an inner surface of the insulating ring. The outer circumferential channel and the inner circumferential serration are mating features, i.e., have complementary shapes, and the inner circumferential channel and the outer circumferential serration are mating features.

A second aspect of the disclosure provides a dynamoelectric machine having: a rotor and a stator at least partially surrounding the rotor, wherein the rotor includes: a first end shield disposed on a first axial end of the rotor, and a second end shield disposed on a second axial end of the rotor; and a bearing disposed axially outboard of each of the first end shield and the second end shield. At least one of the bearings is insulated using a bearing ring including: an outer ring having an inner circumferential channel disposed on a radially inward surface thereof; an inner ring disposed within the outer ring and concentric therewith, the inner ring having an outer circumferential channel disposed on a radially outward surface thereof; and an insulating ring disposed between the inner ring and the outer ring. At least one of the first end shield and the second end shield are electrically insulated from the bearing disposed axially outward thereof.

A third aspect of the disclosure provides a method for forming an insulated bearing ring, the method including: providing an outer ring having a first diameter and an inner circumferential channel disposed on a radially inward surface thereof; providing an inner ring having a second diameter that is smaller than the first diameter, and an outer circumferential channel disposed on a radially outward surface thereof, inserting the inner ring into the outer ring such that the inner ring and the outer ring are substantially concentric; and injecting an insulating material into an annular space between the inner ring and the outer ring.

These and other aspects, advantages and salient features of the invention will become apparent from the following detailed description, which, when taken in conjunction with the annexed drawings, where like parts are designated by like reference characters throughout the drawings, disclose embodiments of the invention.

### BRIEF DESCRIPTION OF THE DRAWINGS

FIGS. 1-3 show a perspective view of portions of a bearing ring in accordance with embodiments of the invention.
FIG. 4 shows a perspective view of a bearing ring in accordance with embodiments of the invention.
FIG. 5 shows a partial cutaway perspective view of a bearing ring in accordance with embodiments of the invention.
FIG. 6 shows a partial perspective view of a portion of a bearing ring in accordance with embodiments of the invention.
FIG. 7 shows a cross sectional view of a portion of a dynamoelectric machine including a bearing in accordance with embodiments of the invention.
FIG. 8 depicts a cross-sectional view of a generator or motor having a rotor and a stator according to embodiments of the invention.

It is noted that the drawings of the disclosure are not necessarily to scale. The drawings are intended to depict only typical aspects of the disclosure, and therefore should not be considered as limiting the scope of the disclosure. In the drawings, like numbering represents like elements between the drawings.

### DETAILED DESCRIPTION OF THE INVENTION

At least one embodiment of the present invention is described below in reference to its application in connection with the operation of a dynamoelectric machine. Although embodiments of the invention are illustrated relative to a dynamoelectric machine in the form of a generator, it is understood that the teachings are equally applicable to other electric machines including, but not limited to, other types of generators and motors. Further, at least one embodiment of the present invention is described below in reference to a nominal size and including a set of nominal dimensions. However, it should be apparent to those skilled in the art that the present invention is likewise applicable to any suitable generator and/or motor. Further, it should be apparent to those skilled in the art that the present invention is likewise applicable to various scales of the nominal size and/or nominal dimensions.

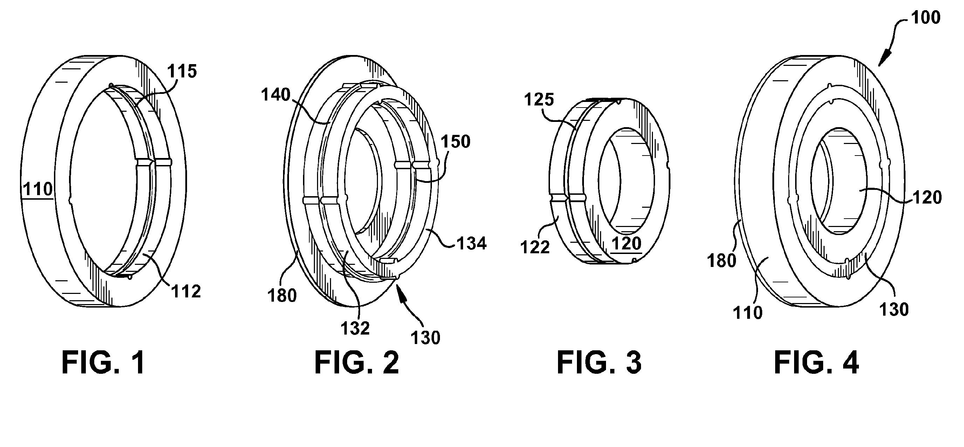

As indicated above, aspects of the invention provide an insulated bearing ring and a dynamoelectric machine having an insulated bearing ring. FIGS. 1-8 show different aspects of a bearing ring and the dynamoelectric machine environment in which it may be used.

As shown in FIG. 1, an outer ring 110 is provided, having an inner circumferential channel 115 disposed on a radially inward surface 112 of outer ring 110. Further provided is an inner ring 120, shown in FIG. 3. Inner ring 120 may include an outer circumferential channel 125 disposed on a radially outward surface 122 of inner ring 120. Each of inner ring 120 and outer ring 110 may comprise a metal. In some embodiments, the metal may be steel or another metal.

In a complete bearing ring 100, inner ring 120 is disposed within outer ring 110 and positioned such that inner ring 120 and outer ring 110 are substantially concentric. The outer diameter of inner ring 120 is smaller than the inner diameter of outer ring 110, such that when inner ring 120 is disposed within outer ring 110, an annular space remains between inner ring 120 and outer ring 110. Insulating ring 130, shown in FIG. 2, is disposed between inner ring 120 and the outer ring 110, in the annular space created when inner ring 120 is positioned in outer ring 110. Insulating ring 130 may comprise one of an insulating polymer or a rubber, and in some embodiments may be polytetrafluoroethylene (PTFE). Soft polymers and rubber may assist in dampening vibration in the resulting bearing ring 100.

As shown in FIG. 2, insulating ring 130 may include an outer circumferential serration 140 which extends radially outward from an outer surface 132 of the insulating ring 130. Insulating ring 130 may further include an inner circumferential serration 150 extending radially inward from an inner surface 134 of the insulating ring 130. As shown in FIGS. 4-5, when bearing ring 100 is assembled, outer circumferential serration 140 mates with inner circumferential channel 115, and inner circumferential serration 150 mates with outer circumferential channel 125.

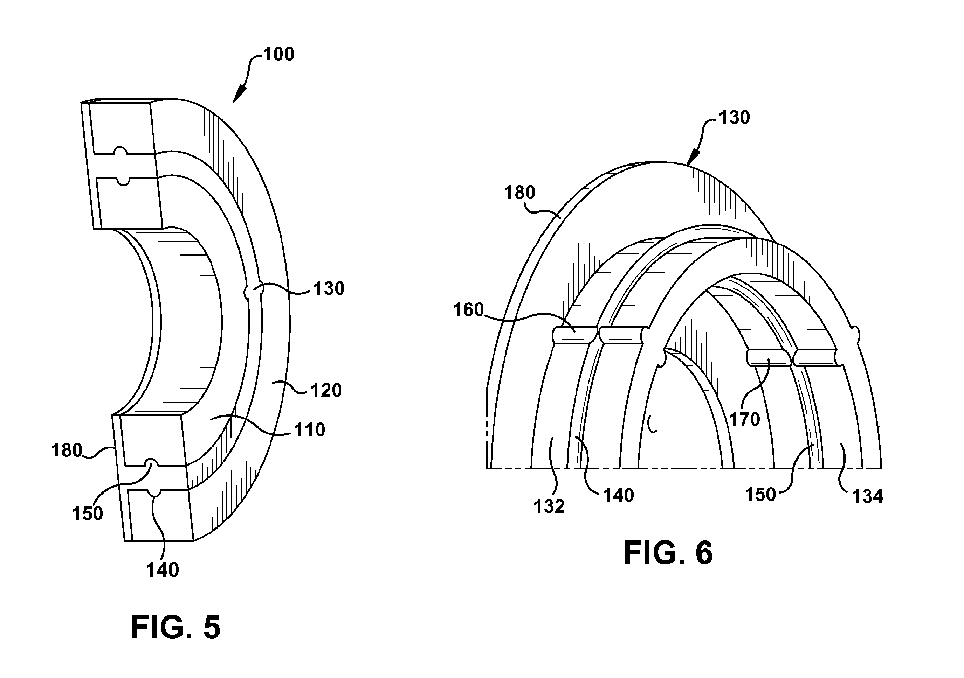

Insulating ring 130 may further include at least one outer axial channel 160, shown in FIG. 6, extending longitudinally along an outer surface 132 of insulating ring 130. Insulating ring 130 may further include at least inner one axial channel 170 extending longitudinally along an inner surface 134 of the insulating ring 130. Together, inner circumferential serration 150, outer circumferential serration 140, outer axial channel 160, and inner one axial channel 170 serve to arrest the the relative moment of inner ring 120, outer ring 110, and insulating ring 130 during use.

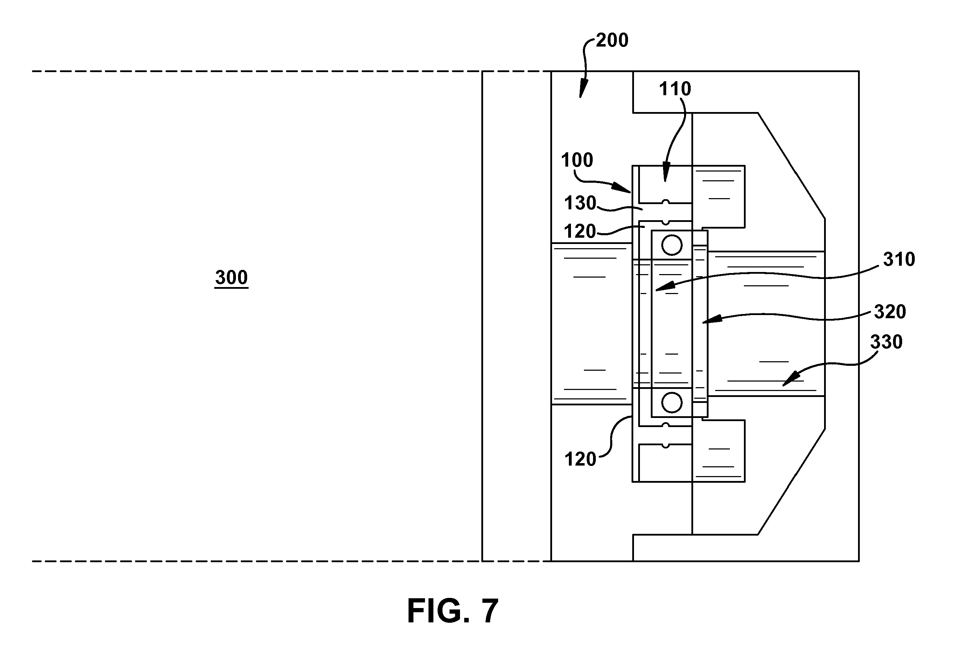

Insulating ring 130 may further include a substantially circumferential flange 180 disposed on an end of the insulating ring 130, as shown in FIGS. 2, 4, and 5-6. Flange 180 may extend both radially inwardly and radially outwardly from the insulating ring 130. When bearing ring 100 is assembled, flange 180 substantially insulates an axially inboard end face of the bearing ring as shown in FIG. 7.

Bearing ring 100 may be used in a dynamoelectric machine such as a generator 400 or motor to support rotor 300 and insulate the bearing.

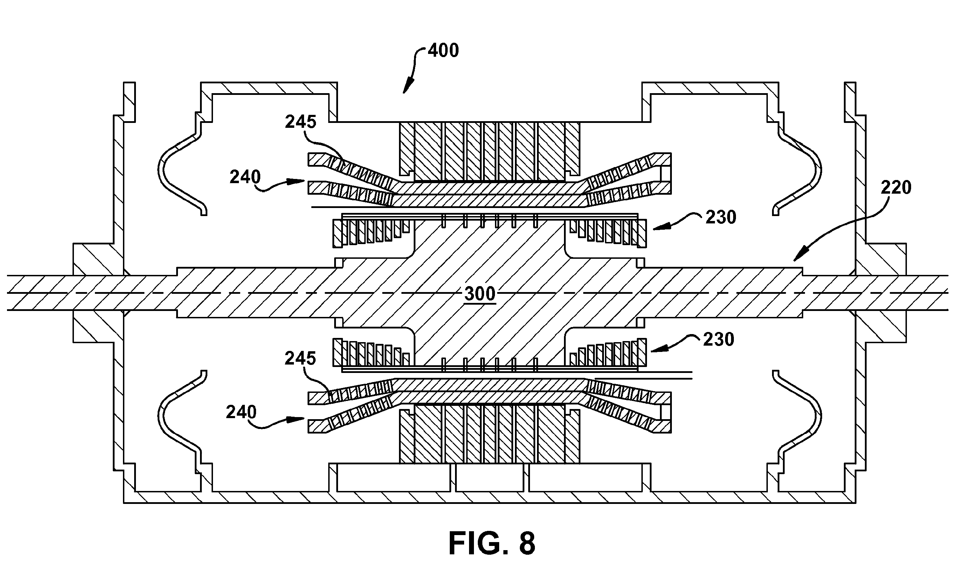

FIG. 8 shows a cross-sectional schematic view of a generator 400, including stator 240, and rotor 300 positioned within stator 240. Stator 240 includes groups of coils 245, and may comprise any now known or later developed stator structure. As shown, rotor 300 may have spindle 220 and groups of coils 230 disposed about the spindle. The spindle may be formed of, for example, iron or steel. Rotor 300 rotates about a longitudinal axis within stator 240.

Referring back to FIG. 7, a first end shield 200 may be disposed on a first end of rotor 300. A second end shield, not pictured, may be disposed on a second end of rotor 300. A bearing ring 100 may be disposed axially outboard of each of the first end shield 200 and the second end shield to support the rotor and allow it to rotate. As described above, bearing ring 100 may include an outer ring 110, an inner ring 120 disposed within the outer ring 110 and concentric therewith, and an insulating ring 130 disposed in an annular space between the inner ring 120 and the outer ring 110. Inner ring 120 acts as a bearing seat. Insulatinting ring 130 electrically insulates the end shield 200 from the bearing 310 disposed axially outward thereof, washer 320 disposed axially outboard of bearing 310, and bearing cap 330 placed over the assembly on an axially outboard end. Flange 180, described above, extends radially inwardly and radially outwardly from insulating ring 130, substantially covering an axially inboard end face of each of the inner ring 120 and the outer ring 110, providing insulation.

A method for forming insulated bearing ring 100 is also provided. An outer ring 110 (FIG. 1) is provided, having a first diameter and an inner circumferential channel 115 disposed on a radially inward surface thereof. An inner ring 120 (FIG. 3) is further provided, having a second diameter and an outer circumferential channel 125 disposed on a radially outward surface thereof. The second diameter is smaller than the first diameter, such that the outer diameter of inner ring 120 is smaller than the inner diameter of outer ring 110. Inner ring 120 is inserted into outer ring 110 such that the inner ring 120 and the outer ring 110 are substantially concentric. As a result of the diameter features discussed previously, an annular space will exist between inner and outer rings 120, 110. An insulating material may then be injected into the annular space between the inner ring 120 and the outer ring 110, forming insulating ring 130. The insulating material may be a rubber or a soft insulating polymer such as, for example, PTFE.

Insulating ring 130 is provided with an outer circumferential serration 140 extending radially outward from an outer surface of the insulating ring 130. Outer serration 140 is formed when injected insulating material is forced into inner circumferential channel 115. As a result, outer serration 140 and inner circumferential channel 115 have mating shapes and dimensions, i.e., outer serration 140 and inner circumferential channel 115 are complementary to one another. Insulating ring 130 is further provided with an inner circumferential serration 150 extending radially inward from an inner surface of the insulating ring 130, wherein the inner serration 150 mates with the outer circumferential channel 125. Inner circumferential serration 150 is similarly formed when injected insulating material is forced into outer circumferential channel 125.

As shown in FIG. 6, insulating ring is further provided with at least one axial channel 160 extending longitudinally along an outer surface of the insulating ring 130, and at least one axial channel 170 extending longitudinally along an inner surface of the insulating ring 130. Once solidified, inner circumferential serration 150, outer circumferential serration 140, outer axial channel 160, and inner one axial channel 170 serve to arrest the the relative moment of inner ring 120, outer ring 110, and insulating ring 130 during use. Additionally, the injecting of insulating material may be performed in one of the at least one axial serration extending longitudinally along the outer surface of the insulating ring 130, or one of the at least one axial serration extending longitudinally along the inner surface of the insulating ring 130.

Once assembled, bearing ring 100 (FIG. 4) may be machined on at least one surface of inner ring 120 and/or outer ring 110 in order to achieve a desired dimension. The shape or dimension desired may be the shape or dimension required by a particular dynamoelectric machine, to accommodate bearing ring 100 in the end shield hub and the bearing in it, thus allowing for customization of the shape after assembly. Insulated bearing ring 100 may then be press fitted into the end shield hub.

As used herein, the terms "first," "second," and the like, do not denote any order, quantity, or importance, but rather are used to distinguish one element from another, and the terms "a" and "an" herein do not denote a limitation of quantity, but rather denote the presence of at least one of the referenced item. The modifier "about" used in connection with a quantity is inclusive of the stated value and has the meaning dictated by the context (e.g., includes the degree of error associated with measurement of the particular quantity). The suffix "(s)" as used herein is intended to include both the singular and the plural of the term that it modifies, thereby including one or more of that term (e.g., the metal(s) includes one or more metals). Ranges disclosed herein are inclusive and independently combinable (e.g., ranges of "up to about 25 mm, or, more specifically, about 5 mm to about 20 mm," is inclusive of the endpoints and all intermediate values of the ranges of "about 5 mm to about 25 mm," etc.).

While various embodiments are described herein, it will be appreciated from the specification that various combinations of elements, variations or improvements therein may be made by those skilled in the art, and are within the scope of the invention. In addition, many modifications may be made to adapt a particular situation or material to the teachings of the invention without departing from essential scope thereof. Therefore, it is intended that the invention not be limited to the particular embodiment disclosed as the best mode contemplated for carrying out this invention, but that the invention will include all embodiments falling within the scope of the appended claims.

Various aspects and emboidments of the present invention are defined by the following numbered clauses:
1. A bearing ring comprising:
   an outer ring having an inner circumferential channel disposed on a radially inward surface thereof;
   an inner ring disposed within the outer ring and concentric therewith, the inner ring having an outer circumferential channel disposed on a radially outward surface thereof; and
   an insulating ring disposed between the inner ring and the outer ring, wherein the insulating ring includes:
      an outer circumferential serration extending radially outward from an outer surface of the insulating ring, and
      an inner circumferential serration extending radially inward from an inner surface of the insulating ring,
   wherein the outer circumferential channel and the inner circumferential serration are mating features, and
   wherein the inner circumferential channel and the outer circumferential serration are mating features.
2. The bearing ring of clause 1, wherein the insulating ring further comprises
   at least one axial channel extending along an outer surface of the insulating ring, and
   at least one axial channel extending along an inner surface of the insulating ring.
3. The bearing ring of clause 1 or clause 2, wherein each of the inner ring and the outer ring comprise a metal.
4. The bearing ring of any preceding clause, wherein the metal comprises steel.
5. The bearing ring of any preceding clause, wherein the insulating ring comprises one of an insulating polymer or a rubber.
6. The bearing ring of any preceding clause, wherein, in the case that the insulating ring comprises the insulating polymer, the insulating polymer comprises polytetrafluoroethylene (PTFE).
7. The bearing ring of any preceding clause, wherein the insulating ring further comprises a substantially circumferential flange disposed on an axial end of the insulating ring,
   wherein the flange extends radially inwardly and radially outwardly from the insulating ring, substantially insulating an axially inboard end face of the bearing ring.
8. A dynamoelectric machine comprising:
   a rotor; and
   a stator at least partially surrounding the rotor,
   wherein the rotor includes:
      a first end shield disposed on a first axial end of the rotor, and a second end shield disposed on a second axial end of the rotor;
      a bearing disposed axially outboard of each of the first end shield and the second end shield, wherein the bearing includes:
         an outer ring having an inner circumferential channel disposed on a radially inward surface thereof;
         an inner ring disposed within the outer ring and concentric therewith, the inner ring having an outer circumferential channel disposed on a radially outward surface thereof; and
         an insulating ring disposed between the inner ring and the outer ring,
      wherein at least one of the first end shield and the second end shield are electrically insulated from the bearing disposed axially outward thereof.
9. The dynamoelectric machine of any preceding clause, wherein the insulating ring further comprises:
   an outer circumferential serration extending radially outward from an outer surface of the insulating ring, and
   an inner serration extending radially inward from an inner surface of the insulating ring,
   wherein the outer circumferential channel and the inner serration are mating features, and
   wherein the inner circumferential channel and the outer circumferential serration are mating features.
10. The dynamoelectric machine of any preceding clause, wherein the insulating ring further comprises:
   at least one axial channel extending longitudinally along an outer surface of the insulating ring, and
   at least one axial channel extending longitudinally along an inner surface of the insulating ring.
11. The dynamoelectric machine of any preceding clause, wherein each of the inner ring and the outer ring comprise a metal.
12. The dynamoelectric machine of any preceding clause, wherein the metal comprises steel.
13. The dynamoelectric machine of any preceding clause, wherein the insulating ring comprises one of an insulating polymer or a rubber.
14. The dynamoelectric machine of any preceding clause, wherein, in the case that the insulating ring comprises the insulating polymer, the insulating polymer comprises polytetrafluoroethylene (PTFE).
15. The dynamoelectric machine of any preceding clause, wherein the insulating ring further comprises a substantially circumferential flange disposed on an axial end of the insulating ring,
   wherein the flange extends radially inwardly and radially outwardly from the insulating ring, substantially covering an axially inboard end face of each of the inner ring and the outer ring.
16. A method for forming an insulated bearing, the method comprising:
   providing an outer ring having a first diameter and an inner circumferential channel disposed on a radially inward surface thereof;
   providing an inner ring having a second diameter and an outer circumferential channel disposed on a radially outward surface thereof,
   wherein the second diameter is smaller than the first diameter;
   inserting the inner ring into the outer ring such that the inner ring and the outer ring are substantially concentric; and
   injecting an insulating material into an annular space between the inner ring and the outer ring.
17. The method of any preceding clause, further comprising, on the insulating ring,
   providing an outer circumferential serration extending radially outward from an outer surface of the insulating ring, wherein the outer circumferential serration mates with the inner circumferential channel;
   providing an inner circumferential serration extending radially inward from an inner surface of the insulating ring, wherein the inner serration mates with the outer circumferential channel;
   providing at least one axial channel extending longitudinally along an outer surface of the insulating ring, and
   providing at least one axial channel extending longitudinally along an inner surface of the insulating ring.
18. The method of any preceding clause, wherein the injecting is performed in one of the at least one axial serration extending longitudinally along the outer surface of the insulating ring, or one of the at least one axial serration extending longitudinally along the inner surface of the insulating ring.
19. The method of any preceding clause, further comprising machining a surface of at least one of the inner ring or the outer ring.
20. The method of any preceding clause, wherein the insulating ring further comprises one of an insulating polymer or a rubber.

## Claims

1. A bearing ring (100) comprising:
an outer ring (110) having an inner circumferential channel disposed on a radially inward surface thereof;
an inner ring (120) disposed within the outer ring (110) and concentric therewith, the inner ring having an outer circumferential channel disposed on a radially outward surface thereof; and
an insulating ring (130) disposed between the inner ring (120) and the outer ring (110), wherein the insulating ring includes:
an outer circumferential serration (140) extending radially outward from an outer surface of the insulating ring, and
an inner circumferential serration (150) extending radially inward from an inner surface of the insulating ring,
wherein the outer circumferential channel and the inner circumferential serration are mating features, and
wherein the inner circumferential channel and the outer circumferential serration are mating features.

2. The bearing ring of claim 1, wherein the insulating ring further comprises
at least one axial channel extending along an outer surface of the insulating ring, and
at least one axial channel extending along an inner surface of the insulating ring.

3. The bearing ring of claim 1 or claim 2, wherein each of the inner ring and the outer ring comprise a metal.

4. The bearing ring of any preceding claim, wherein the metal comprises steel.

5. The bearing ring of any preceding claim, wherein the insulating ring comprises one of an insulating polymer or a rubber.

6. The bearing ring of any preceding claim, wherein, in the case that the insulating ring comprises the insulating polymer, the insulating polymer comprises polytetrafluoroethylene (PTFE).

7. The bearing ring of any preceding claim, wherein the insulating ring further comprises a substantially circumferential flange disposed on an axial end of the insulating ring,
wherein the flange extends radially inwardly and radially outwardly from the insulating ring, substantially insulating an axially inboard end face of the bearing ring.

8. A dynamoelectric machine comprising:
a rotor; and
a stator at least partially surrounding the rotor,
wherein the rotor includes:
a first end shield disposed on a first axial end of the rotor, and a second end shield disposed on a second axial end of the rotor;
a bearing disposed axially outboard of each of the first end shield and the second end shield, wherein the bearing includes:
an outer ring having an inner circumferential channel disposed on a radially inward surface thereof;
an inner ring disposed within the outer ring and concentric therewith, the inner ring having an outer circumferential channel disposed on a radially outward surface thereof; and
an insulating ring disposed between the inner ring and the outer ring,
wherein at least one of the first end shield and the second end shield are electrically insulated from the bearing disposed axially outward thereof.

9. The dynamoelectric machine of claim 8, wherein the insulating ring further comprises:
an outer circumferential serration extending radially outward from an outer surface of the insulating ring, and
an inner serration extending radially inward from an inner surface of the insulating ring,
wherein the outer circumferential channel and the inner serration are mating features, and
wherein the inner circumferential channel and the outer circumferential serration are mating features.

10. . A dynamoelectric machine comprising:
a rotor; and
a stator at least partially surrounding the rotor,
wherein the rotor includes:
a first end shield disposed on a first axial end of the rotor, and a second end shield disposed on a second axial end of the rotor; and
a bearing according to any of claims 1 to 7, disposed axially outboard of each of the first end shield and the second end shild.

11. A method for forming an insulated bearing, the method comprising:
providing an outer ring having a first diameter and an inner circumferential channel disposed on a radially inward surface thereof;
providing an inner ring having a second diameter and an outer circumferential channel disposed on a radially outward surface thereof,
wherein the second diameter is smaller than the first diameter;
inserting the inner ring into the outer ring such that the inner ring and the outer ring are substantially concentric; and
injecting an insulating material into an annular space between the inner ring and the outer ring.

12. The method of claim 11, further comprising, on the insulating ring,
providing an outer circumferential serration extending radially outward from an outer surface of the insulating ring, wherein the outer circumferential serration mates with the inner circumferential channel;
providing an inner circumferential serration extending radially inward from an inner surface of the insulating ring, wherein the inner serration mates with the outer circumferential channel;
providing at least one axial channel extending longitudinally along an outer surface of the insulating ring, and
providing at least one axial channel extending longitudinally along an inner surface of the insulating ring.

13. The method of claim 11 or claim 12, wherein the injecting is performed in one of the at least one axial serration extending longitudinally along the outer surface of the insulating ring, or one of the at least one axial serration extending longitudinally along the inner surface of the insulating ring.

14. The method of any of claims 11 to 13, further comprising machining a surface of at least one of the inner ring or the outer ring.

15. The method of any of claims 11 to 14, wherein the insulating ring further comprises one of an insulating polymer or a rubber.
